# EUROPEAN PATENT SPECIFICATION

(11) **EP 4 277 469 B1**
(45) Date of publication and mention of the grant of the patent: **26.02.2025**
(21) Application number: 22700644.2
(22) Date of filing: 14.01.2022
(51) Int. Cl.: A22C 25/16

(54) **A FISH FILLETING MACHINE WITH A PELVIC FIN SPLITTER AND A METHOD OF FILLETING FISH WITH TWO PELVIC FINS**
FISCHFILETIERMASCHINE MIT EINEM BECKENFLOSSENSCHNEIDER ODER -TEILER
MACHINE À FILETER LES POISSONS ÉQUIPÉE D'UN COUTEAU OU D'UN SÉPARATEUR DE NAGEOIRES PELVIENNES

(30) Priority: 14.01.2021 EP 21151650
(43) Date of publication of application: 22.11.2023
(73) Proprietor: Marel Salmon A/S, 9530 Støvring (DK)
(72) Inventor: KJÆR, Anders, 9530 Støvring (DK); LANZKY, Thomas Nørlund, 9530 Støvring (DK)
(74) Representative: Inspicos P/S
(86) International application number: PCT/EP2022/050758
(87) International publication number: WO 2022/152855

(56) References cited:
- WO-A2-98/09529
- DE-A1- 10 034 936
- US-B1- 6 280 313

## Description

### Field of the invention

The present invention relates to a fish filleting machine with a pelvic fin splitter, in particular a machine for filleting edible fish having distinct right and left side pelvic fins on opposite sides of a vertical centre plane of the fish. Such fish may e.g. be from the family *Cichlidae,* such as fish in the group commonly called Tilapia. The invention further relates to a method of filleting fish with a distinct right and left side pelvic fin.

### Background of the invention

Some fish have only one pelvic fin, other fish such as some Tilapia have two pelvic fins on opposite sides of a centre plane. The two pelvic fins are typically connected by a tough bone or cartilage structure. When filleting fish in a filleting machine, the quality of the filleting process can be disturbed by the pelvic fins of the fish and particularly by the tough structure connecting right and left side pelvic fins. This is especially the case if the pelvic fins or the connection between them are very hard. Tilapia fish and other fish from the family *Cichlidae* are examples of such fish.

To avoid disturbance from the pelvic fins of fish to be filleted in a filleting machine, one opportunity is to cut off the pelvic fins. Cutting away the pelvic fins is often performed manually increasing the cost and complexity of the filleting process.

WO98/09529 discloses an apparatus for removing bones from flesh in a fish body in which a blade assembly is movable relative to a jig which holds the fish.

### Description of the invention

It is an object of embodiments of the invention to enable a more precise filleting and reduced manual intervention in the filleting process. It is a further object to reduce machine complexity and potentially increase processing speed.

According to these and further objects, the invention, in a first aspect, provides a fish filleting machine as defined in claim 1 for cutting fillets from fish. The machine comprises a feed-line for feeding fish through the machine in an upright orientation with right and left sides of the fish on opposite sides of a centre plane.

The machine further comprises a cutting device for filleting at least the ventral part of the fish.

Upstream of the cutting device, the machine comprises a pelvic fin splitter arranged to split a connection between the right side pelvic fin and the left side pelvic fin of the fish.

By splitting a connection between the right side pelvic fin and the left side pelvic fin of the fish is to be understood the process of splitting a structure connecting two pelvic fins located on each half part of the fish, i.e. on opposite sides of the centre plane. This connection is disconnected by a cut through the connection e.g. without removing the pelvic fins.

Surprisingly, it has been observed that splitting and thus separating the pelvic fins from each other results in a good filleting process and prevents a typically occurring displacement occurring when filleting knifes reach the pelvic fins or the tough structure connecting the pelvic fins.

Furthermore, for a filleting machine with the pelvic fin splitter, the manpower required to perform manual removal of the pelvic fin is lowered since the pelvic fins can stay on the fish during filleting.

The connection between the pelvic fins may particularly be split by a cut directed substantially parallel to the spine of the fish. For this purpose, the fin splitter may comprise a knife arranged to cut along the centre plane. The centre plane, herein, means a virtual plane vertically through the fish and defining a plane of symmetry through the fish with a right side of the fish on the right side of the centre plane and a left side of the fish on a left side of the centre plane.

The fish to be filleted is preferably de-headed and gutted before fed to the infeed of the filleting machine. The de-headed fish can be fed head part first or tail part first, where 'first' illustrates the fish part first reaching the cutting section of a filleting machine. By head part is meant the end of the fish where the head has been removed. Also, the de-headed fish may be fed with the dorsal side up in the infeed or with the ventral side up. Preferred is when the fish is fed in the infeed with head part first. More preferred is when the fish is fed with the de-headed head part first and the ventral side up. The filleting machine and method described herein is illustrated with fish fed head part first and the ventral side up.

The term "centre plane", when used herein refers to a virtual vertical plane separating the two pelvic fins and indicating a preferred location for the pelvic fin splitter to split the connection between the two pelvic fins.

The fish may be carried through the machine with the left and right sides of the fish on opposite sides of a splitting plane defined by the pelvic fin splitter.

The fish may be held in the position where the pelvic fin splitter splits the connection between the two pelvic fins by transport bands and pressing means which are disclosed relative to the drawings.

The pelvic fin splitter may comprise at least one cutting edge for splitting the connection between the pelvic fins, and separating the pelvic fins from each other. The cutting edge may be of any form e.g. a straight knife capable of cutting between the pelvic fins. As described the connection between the two pelvic fins may be tough and breaking this connection e.g. by cutting has the advantage of reducing the risk of disturbances in the cutting process when cutting along the ventral part of the fish to separate part of the fish from the vertebral column.

In a preferred embodiment the pelvic fin splitter comprises at least one circular cutting blade with an outer cutting edge, such as two circular cutting blades or more preferred a single circular cutting blade with an outer cutting edge.

The cutting device for filleting at least the ventral part of the fish may comprise a set of two band saws, where one band saw cuts the right side of the fish and the other band saw cuts the left side of the fish i.e. each band saw cuts both the ventral and the dorsal part of the fish fillets at the side where that band saw is located. In another embodiment, the cutting device may comprise a set of two circular, rotating cutting blades arranged on opposite sides of the centre plane.

The cutting device for filleting at least the ventral part of the fish may also comprise a first set of cutting blades for cutting the dorsal or the ventral part of the fish by cutting towards and along the vertebral column, and a second set of cutting blades for cutting that dorsal or ventral part of the fish which was not cut by the first set of cutting blades, particularly by cutting towards and along the vertebral column

The pelvic fin splitter preferably defines a splitting plane located between cutting planes defined by the cutting device for filleting at least the ventral part of the fish such as between cutting planes of the first or second set of cutting blades for cutting the ventral part of the fish.

The splitting plane of the pelvic fin splitter and the cutting planes of the first or second set of cutting blades may be substantially parallel to the feed-line.

A location of the splitting plane of the pelvic fin splitter substantially with an equal distance to both pelvic fins, i.e. a location of the pelvic fin splitter with its plane in the centre plane of the fish, creates substantially two similar half parts of the pelvic fin connection. In the following filleting process, this may improve the cutting processes and equally affect the symmetry of the fillets. Accordingly, the pelvic fin splitter may be arranged to define a splitting plane essentially centrally between the two pelvic fins.

The cutting device for filleting the fish may, likewise, be arranged with its two cutting planes symmetrically on opposite sides of the centre plane and thus symmetrically relative to the splitting plane of the filleting machine to thereby cut the two sides of the vertebral column symmetrically.

The filleting machine may further comprise an actuator to which the pelvic fin splitter is connected. The actuator may be capable of locating and de-locating at least a part of the pelvic fin splitter such that the pelvic fin splitter has a cutting line located between the at least one set of cutting devices such as between the cutting lines of the first or second set of cutting blades for cutting the ventral part of the fish.

The actuator may further be capable of locating and de-locating at least a part of the pelvic fin splitter between the at least one set of cutting devices such as between a set of cutting blades of the first or second set of cutting blades for cutting the ventral part of the fish.

Upstream, herein, refers to a location of the pelvic fin splitter being before the cutting device in the feeding direction of the fish through the machine. The location of the pelvic fin splitter may particularly be close to the cutting device, e.g. with a cutting blade of the pelvic fin splitter partly overlapping the cutting blades of the cutting device in the feeding direction of the fish through the machine.

An advantage of having the pelvic fin splitter located just upstream of the cutting device such as just upstream of the first or second set of cutting blades for cutting the ventral part of the fish is that the fish may be held stably and fixed relative to the centre plane while performing both the pelvic splitting and the filleting. At this position of the pelvic fin splitter and the cutting device, the fish may be influenced by means capable of positioning the fish before performing the cutting process. I.e. the fish can be arranged in the correct position for all the cutting processes taking place, and no further positioning means may be required at other locations of the machine. I.e. the pelvic fin splitter may be included in a fish filleting machine without introducing additional positioning means. The positioning means may include e.g. spring-like elongated members biassing the fish from opposite sides of the centre plane towards the centre plane.

The filleting machine may further comprise a controller for controlling the actuator. The controller may control the actuator according to the location of a fish to be cut relative to the pelvic fin splitter. Hereby the pelvic fin splitter may be activated, and the cutting edge of the pelvic fin splitter can be located to cut through the connection between the pelvic fins of a fish transported along the feed-line and passing the pelvic fin splitter.

The controller may also control the actuator according to the location of a fish to be cut relative to the pelvic fin splitter, such that the pelvic fin splitter can be de-activated, and the cutting edge of the pelvic fin splitter is removed from cutting into a fish transported along the feed-line. In this situation the pelvic fin splitter may be activated at a time where no fish is passing the pelvic fin splitter, and hereby the pelvic fin splitter is in place when the next fish is moved towards the pelvic fin splitter.

The controller may also control the actuator to activate and de-activate the pelvic fin splitter such that the pelvic fin splitter is in position to split the connection between the pelvic fins of a fish just before the pelvic fin is to pass the location of the pelvic fin splitter, and such that the pelvic fin splitter is moved out of the cutting position as soon as the connection between the pelvic fins of a fish has been cut.

An advantage of a controller and actuator to locate and de-locate the pelvic fin splitter is that a cut can be made selectively, e.g. only in that part of the fish where it is required or scheduled to be made. Hereby, the pelvic fin splitter may not cut into fish meat that can be located on portions which can be sold. Such cutting into fish meat may lower the quality of the portion.

At least one sensor may be used to determine the location of the fish to be filleted and/or to determine the location of the pelvic fin of the fish to be filleted. The sensor(s) can send information to the controller which can control the vertical location of the pelvic fin splitter, hereby the pelvic fin splitter can be controlled such that only the connection between two pelvic fins is cut.

In the filleting machine the set of cutting blades of the first or second set of cutting blades for cutting the ventral part of a fish and the pelvic fin splitter is preferably located along and at least mainly above a horizontal line or plane of the feed-line for feeding fish through the filleting machine and the first or second set of cutting blades for cutting the dorsal part of a fish is located along and at least mainly below the horizontal line or plane of the feed-line. Preferably the first set of cutting blades and second set of cutting blades are displaced relative to each other along the horizontal line or plane, such that the two sets of cutting blades are not located directly above and below each other. The horizontal line or plane may be a thin line or plane and the first and second set of cutting blades may each touch the line or plane, one blade from above and one blade from below, or one of the blade may have a small part of the blade located on the other side of the line or plane. Hereby, a fish when being cut by the first and second set of cutting blades is performing an s-shaped travel through this cutting process.

In a second aspect, the invention provides a method as defined in claim 13 for filleting a fish from a species of a kind having a right side pelvic fin and a left side pelvic fin on opposite sides of a centre plane of the fish.

The method comprises a step of splitting a connection between the right side pelvic fin and the left side pelvic fin and subsequently filleting the fish by cutting right and left side fillets at least from the ventral part by cutting on opposite sides of the central plane of the fish.

The splitting may be carried out in a direction substantially parallel to the spine of the fish. e.g. along the central plane of the fish.

The method may be carried out without removing the right and left side pelvic fins from the fish, and the subsequent filleting may, likewise, be carried out without removing the right and left side pelvic fins from the right and left side fillets.

The pelvic fins may, eventually, be removed from the fillets after the filleting has occurred.

This could take place immediately after the filleting or later in time.

The splitting of the connection between the pelvic fins and the filleting takes place in a fish filleting machine according to the first aspect of the invention, and the method comprises the steps of
i. loading a fish to a feed-line of the fish filleting machine,
ii. directing the fish towards the pelvic fin splitter,
iii. splitting the connection between the pelvic fins of the fish by the pelvic fin splitter.

Several fish may be in the feed-line at the same time, and the feed-line may direct the fish towards the pelvic fins splitter, one fish at a time.

The method may also comprise the steps of
i. loading a fish to a feed-line of the fish filleting machine,
ii. directing the fish towards the pelvic fin splitter,
iii. directing the pelvic fin splitter towards the pelvic fin of the fish,
iv. splitting the connection between the pelvic fins of the fish by the pelvic fin splitter.

The methods described above may further comprise a step of directing the pelvic fin splitter away from the fish after the step of splitting the connection between the pelvic fins of the fish by the pelvic fin splitter.

In the method, a controller may be controlling the step of directing the pelvic fin splitter towards the pelvic fin of the fish and/or the step of directing the pelvic fin splitter away from the fish, such that the pelvic splitter cuts into the connection between the pelvic fins only.

More steps or details of the method is available in the description of the filleting machine above and in the description of the figures.

### Brief description of the drawings

Fig. 1 illustrates part of the feed-line in a fish filleting machine with infeed, knives and outlet.
Fig. 2 illustrates a closer look at the cutting knives.
Fig. 3 illustrates a perspective view from above the cutting knives with the pelvic fin cutting blade partly located between a set of circular cutting blades.
Fig. 4 illustrates the cutting knives seen directly from above with two sets of circular cutting blades and a pelvic fin splitter located partly between blades of one set of circular cutting blades.
Fig. 5 illustrates a Tilapia with two pelvic fins on opposite sides of a virtual centre plane.

### Detailed description of the drawings

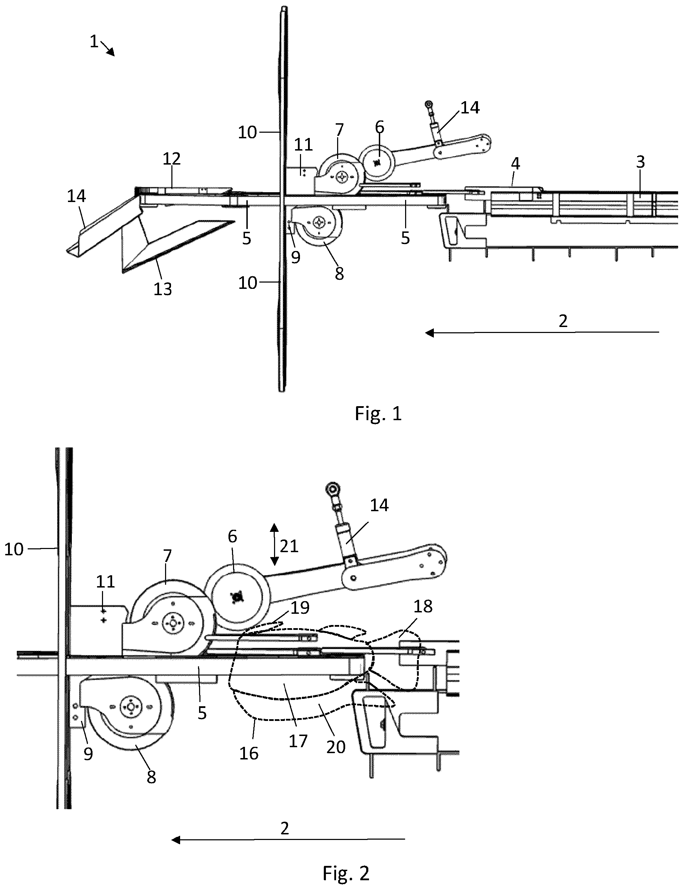

Fig. 1 illustrates part of a fish filleting machine 1 illustrating a feed-line for fish passing through the filleting machine 1. The transport direction of fish to be filleted is indicated by the arrow 2. In this embodiment the fish (not illustrated) is to be fed preferably de-headed, though the machine with the head part first, and with the dorsal part downward in the infeed 3, see Fig. 2 for illustration of the fish in the filleting machine 1. The infeed 3 is preferably longer than indicated in this figure. Downstream the infeed 3, orientation means 4 are illustrated for securing proper orientation of a fish before a transport band 5 engages with the fish. The transport band 5 transports the fish pass different knives and towards an outlet 14.

Illustrated are a pelvic fin splitter 6, a first set of cutting blades 7, a second set of cutting blades 8, a third set of cutting blades 9 and a fourth set of cutting blades 10, here being a set of two band saws, one located on each side of the feed-line. The cutting blades, 7, 8, 9 and 10 constitute the cutting device. The pelvic fin splitter is located upstream the cutting device in the direction of the transport of fish illustrated by the arrow 2.

Downstream the first set of cutting blades 7 is a set of guides 11 for guiding the fillet parts cut by the first set of cutting blades 7 outside the fourth set of cutting blades 10 as this cuts fish meat located along the vertebral column of the fish.

Fig. 2 illustrates a closer look at the cutting section of the fish filleting machine 1. An outline 16 of a de-headed fish 17 with the tail 18, the pelvic fins 19 and the dorsal fin 20 illustrates the location of the fish just prior to the filleting process. The fish should be between the set of transport bands 5 during the filleting process, but for illustration the outline 16 of the fish is indicated on top of the feed-line. The fish 17 is illustrated with de-headed head part first and ventral side up in the feed-line. During the filleting process the pelvic fin 19 can be split by the pelvic fin splitter 6, the ventral part of the fish 17 can be filleted by the first set of cutting blades 7, the dorsal part of the fish 17 can be filleted by the second set of the cutting blades 8, a part of the fish meat along the vertebral column at the dorsal part of the fish 17 can be cut by the third set of cutting blades 9, and the part of the fish meat located at the sides of the vertebral column can be cut by the fourth set of cutting blades 10. The set of guides 11 will guide the part of the fillet cut free by the first set of cutting blades 7, such that this cut free part of the fillet is not cut by the fourth set of cutting blades 10. An actuator 14 connected to the pelvic fin splitter 6 may be controlled to position the pelvic fin splitter 6 to split the pelvic fin 19 only. Sensor(s) (not shown) may be used to determine the location of the fish 17 to be filleted and/or to determine the location of the pelvic fin 19 of the fish 17 to be filleted. The sensor(s) can send information to a controller (not shown) capable of controlling the vertical location of the pelvic fin splitter 6 as indicated by the double arrow 21 showing the pelvic fin splitter 6 can be moved up and down, and this can be done such that only the connection between two pelvic fins is cut.

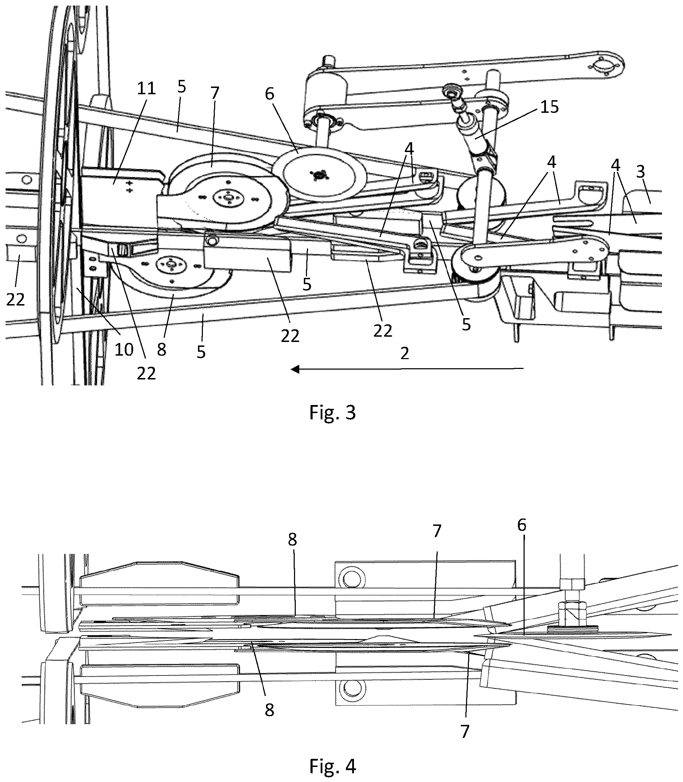

Fig. 3 illustrates a perspective view from above the cutting knives with the blade of the pelvic fin splitter 6 partly located between two blades of a first set of cutting blades 7. Some features are similar to what is described related to Fig. 1 or Fig. 2. Clearly illustrated are the two transport bands 5 for transporting fish (not shown) through the cutting area. Different sets of orientation means or position means 4 are illustrated upstream of the first set of cutting blades 7. Different sets of pressing means 22 are illustrated along the transport band 5. The pressing means 22 are used to press on the lateral sides of the fish to be filleting hereby pressing the fish towards the cutting blades making it possible to keep the fish in correct positions and to cut the fillets as decided.

Fig. 4 illustrates the cutting knives seen directly from above with two sets of circular cutting blades 7, 8 and a pelvic fin splitter 6 located partly between the cutting blades of the first set of cutting blades 7.

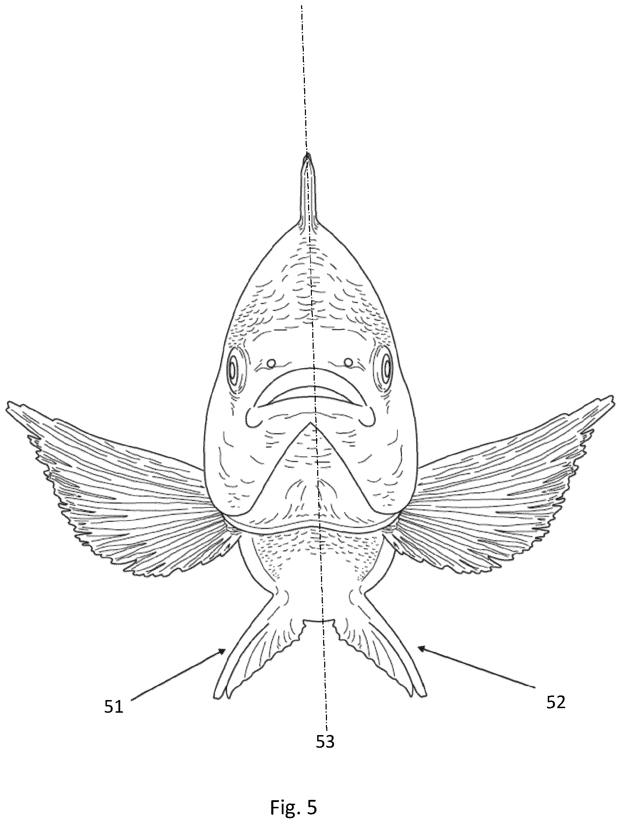

Fig. 5 illustrates a Tilapia with two pelvic fins 51, 52 on opposite sides of a vertical centre plane illustrated by the line 53. The centre plane is a virtual plane through the fish. When splitting the connection between the right and left side pelvic fins 51, 52, the fillets may be obtained with the pelvic fins which are then easily cut away later.

## Claims

1. A fish filleting machine (1) for cutting fillets from fish, the machine comprising
• a feed-line for feeding fish in a feeding direction (2) through the machine and with right side and left side of the fish on opposite sides of a centre plane, the feed-line comprising:
• a cutting device (7, 8, 9, 10) for filleting at least the ventral part of the fish **characterized by** further comprising:
• a pelvic fin splitter (6) located upstream of the cutting device (7, 8, 9, 10) and configured for splitting a connection between a right side pelvic fin (51) and a left side pelvic fin (52) of the fish.

2. The machine according to claim 1, wherein the pelvic fin splitter (6) comprises a knife arranged to cut along the centre plane (53).

3. The machine according to claim 2, wherein the pelvic fin splitter is arranged splitting the connection between the right and left side pelvic fins without releasing the right and left side pelvic fins from the fish.

4. The machine according to any of the preceding claims, wherein the pelvic fin splitter defines a splitting plane between cutting planes defined by the cutting device for cutting the ventral part of the fish.

5. The machine according to claim 4, where the splitting plane of the pelvic fin splitter and the cutting planes of the cutting device are substantially parallel to the feeding direction.

6. The machine according to any of the preceding claims, wherein the pelvic fin splitter comprises a circular cutting blade rotating in the splitting plane.

7. The machine according to claim 6, wherein the cutting device comprises two circular cutting blades arranged on opposite sides of the cutting plane.

8. The machine according to claim 7, wherein the two circular cutting blades of the cutting device are arranged partly overlapping the circular blade of the pelvic fin splitter in the feeding direction.

9. The machine according to any of the preceding claims, wherein the machine comprises an actuator (14) to which the pelvic fin splitter (6) is connected.

10. The machine according to claim 9, wherein the actuator is arranged to move the pelvic fin splitter in the splitting plane between a position where the pelvic fin splitter partly overlaps the cutting device in the feeding direction and a position where there is no overlap between the pelvic fin splitter and the cutting device in the feeding direction.

11. The machine according to any of the preceding claims 9 to 10, further comprising a controller configured to control the actuator (14)according to the location of a fish to be cut relative to the pelvic fin splitter, such that the pelvic fin splitter is activated, and the cutting edge of the pelvic fin splitter is located to split a pelvic fin of a fish transported along the feed-line and passing the pelvic fin splitter, or configured to control the actuator according to the location of a fish to be cut relative to the pelvic fin splitter, such that the pelvic fin splitter is de-activated, and the cutting edge of the pelvic fin splitter is removed from cutting into a fish transported along the feed-line, or configured to control the actuator to activate and de-activate the pelvic fin splitter such that the pelvic fin splitter is in position to split the pelvic fin of a fish just before the pelvic fin is to pass the location of the pelvic fin splitter, and such that the pelvic fin splitter is out of the cutting position as soon as the pelvic fin of a fish has been cut.

12. The machine according to any of the preceding claims, wherein the cutting device comprises a first set of cutting blades and a second set of cutting blades for filleting the ventral part and the dorsal part of a fish and wherein the pelvic fin splitter is located along and at least mainly above a horizontal line of the feed-line for feeding fish through the filleting machine and the first or second set of cutting blades for cutting the dorsal part of a fish is located along and at least mainly below the horizontal line of the feed-line.

13. A method of filleting a fish from a species comprising a right side pelvic fin and a left side pelvic fin on opposite sides of a centre plane of the fish, the method comprising splitting a connection between the right side pelvic fin and the left side pelvic fin and subsequently filleting the fish by cutting right and left side fillets from the ventral part by cutting on opposite sides of the central plane, the method being , carried out in a fish filleting machine according to any of the claims 1 to 12, and the method comprising the steps of
i. loading a fish to the feed-line of the fish filleting machine,
ii. directing the fish towards the pelvic fin splitter,
iii. splitting the connection between the pelvic fins of the fish by the pelvic fin splitter.

14. The method according to claim 13, the method comprising the step of
i. directing the pelvic fin splitter towards a point between the right and left side pelvic fins of the fish,
ii. splitting the connection between the pelvic fins of the fish by the pelvic fin splitter without releasing the right and left side pelvic fins from the fish.

15. The method according to claim 13 or 14, further comprising a step of directing the pelvic fin splitter away from the fish after the step of splitting the connection between the pelvic fins of the fish by the pelvic fin splitter.

## Patentansprüche

1. Fischfiletiermaschine (1) zum Schneiden von Filets aus Fischen, wobei die Maschine Folgendes umfasst
• eine Zuführleitung zum Zuführen von Fisch in einer Zuführrichtung (2) durch die Maschine und mit einer rechten Seite und einer linken Seite des Fisches auf gegenüberliegenden Seiten einer Mittelebene, wobei die Zuführleitung Folgendes umfasst:
• eine Schneidvorrichtung (7, 8, 9, 10) zum Filetieren von mindestens dem ventralen Teil des Fisches,
**dadurch gekennzeichnet, dass** sie ferner Folgendes umfasst:
• einen Bauchflossentrenner (6), welcher der Schneidvorrichtung (7, 8, 9, 10) vorgelagert ist und dazu konfiguriert ist, eine Verbindung zwischen einer rechten Bauchflosse (51) und einer linken Bauchflosse (52) des Fisches zu trennen.

2. Maschine nach Anspruch 1, wobei der Bauchflossentrenner (6) ein Messer umfasst, das dazu angeordnet ist, entlang der Mittelebene (53) zu schneiden.

3. Maschine nach Anspruch 2, wobei der Bauchflossentrenner dazu angeordnet ist, die Verbindung zwischen der rechten und der linken Bauchflosse zu trennen, ohne die rechte und die linke Bauchflosse von dem Fisch zu lösen.

4. Maschine nach einem der vorhergehenden Ansprüche, wobei der Bauchflossentrenner eine Trennebene zwischen Schnittebenen definiert, die durch die Schneidvorrichtung zum Schneiden des ventralen Teils des Fisches definiert werden.

5. Maschine nach Anspruch 4, wobei die Trennebene des Bauchflossentrenners und die Schneidebenen der Schneidvorrichtung im Wesentlichen parallel zu der Zuführrichtung sind.

6. Maschine nach einem der vorhergehenden Ansprüche, wobei der Bauchflossentrenner eine kreisförmige Schneidklinge umfasst, die sich in der Trennebene dreht.

7. Maschine nach Anspruch 6, wobei die Schneidvorrichtung zwei kreisförmige Schneidklingen umfasst, die auf gegenüberliegenden Seiten der Schneidebene angeordnet sind.

8. Maschine nach Anspruch 7, wobei die zwei kreisförmigen Schneidklingen der Schneidvorrichtung so angeordnet sind, dass sie die kreisförmige Klinge des Bauchflossentrenners in der Zuführrichtung teilweise überlappen.

9. Maschine nach einem der vorhergehenden Ansprüche, wobei die Maschine einen Aktuator (14) umfasst, mit dem der Bauchflossentrenner (6) verbunden ist.

10. Maschine nach Anspruch 9, wobei der Aktuator dazu angeordnet ist, den Bauchflossentrenner in der Trennebene zwischen einer Position, in welcher der Bauchflossentrenner die Schneidvorrichtung in der Zuführrichtung teilweise überlappt, und einer Position, in der es zu keiner Überlappung zwischen dem Bauchflossentrenner und der Schneidvorrichtung in der Zuführrichtung kommt, zu bewegen.

11. Maschine nach einem der vorhergehenden Ansprüche 9 bis 10, ferner umfassend eine Steuerung, die dazu konfiguriert ist, den Aktuator (14) gemäß der Position eines zu schneidenden Fisches relativ zu dem Bauchflossentrenner so zu steuern, dass der Bauchflossentrenner aktiviert wird und die Schneidkante des Bauchflossentrenners so positioniert wird, dass sie eine Bauchflosse eines Fisches, der entlang der Zuführleitung transportiert wird und an dem Bauchflossentrenner vorbeiläuft, getrennt wird, oder die dazu konfiguriert ist, den Aktuator gemäß der Position eines zu schneidenden Fisches relativ zu dem Bauchflossentrenner so zu steuern, dass der Bauchflossentrenner deaktiviert wird und die Schneidkante des Bauchflossentrenners von dem Schneiden in einen entlang der Zuführleitung transportierten Fisch entfernt wird, oder die dazu konfiguriert ist, den Aktuator zu steuern, um den Bauchflossentrenner so zu aktivieren und zu deaktivieren, dass sich der Bauchflossentrenner in einer Position befindet, um die Bauchflosse eines Fisches zu trennen, kurz bevor die Bauchflosse an der Position des Bauchflossentrenners vorbeiläuft, und dass sich der Bauchflossentrenner außerhalb der Schneidposition befindet, sobald die Bauchflosse eines Fisches geschnitten wurde.

12. Maschine nach einem der vorhergehenden Ansprüche, wobei die Schneidvorrichtung einen ersten Satz Schneidklingen und einen zweiten Satz Schneidklingen zum Filetieren des ventralen Teils und des dorsalen Teils eines Fisches umfasst und wobei der Bauchflossentrenner entlang und mindestens überwiegend oberhalb einer horizontalen Linie der Zuführleitung zum Zuführen von Fisch durch die Filetiermaschine positioniert ist und der erste oder der zweite Satz Schneidklingen zum Schneiden des dorsalen Teils eines Fisches entlang und mindestens überwiegend unterhalb der horizontalen Linie der Zuführleitung positioniert ist.

13. Verfahren zum Filetieren eines Fisches einer Art, die eine rechte Bauchflosse und eine linke Bauchflosse auf gegenüberliegenden Seiten einer Mittelebene des Fisches umfasst, wobei das Verfahren Trennen einer Verbindung zwischen der rechten Bauchflosse und der linken Bauchflosse und darauffolgendes Filetieren des Fisches durch Schneiden von rechten und linken Filets aus dem ventralen Teil durch Schneiden auf gegenüberliegenden Seiten der Mittelebene umfasst, wobei das Verfahren in einer Fischfiletiermaschine nach einem der Ansprüche 1 bis 12 ausgeführt wird und das Verfahren die folgenden Schritte umfasst
i. Laden eines Fisches in die Zuführleitung der Fischfiletiermaschine,
ii. Leiten des Fisches zu dem Bauchflossentrenner,
iii. Trennen der Verbindung zwischen den Bauchflossen des Fisches durch den Bauchflossentrenner.

14. Verfahren nach Anspruch 13, wobei das Verfahren die folgenden Schritte umfasst
i. Leiten des Bauchflossentrenners zu einem Punkt zwischen der rechten und der linken Bauchflosse des Fisches,
ii. Trennen der Verbindung zwischen den Bauchflossen des Fisches durch den Bauchflossentrenner, ohne die rechte und die linke Bauchflosse von dem Fisch zu lösen.

15. Verfahren nach Anspruch 13 oder 14, ferner umfassend einen Schritt zum Leiten des Bauchflossentrenners weg von dem Fisch nach dem Schritt des Trennens der Verbindung zwischen den Bauchflossen des Fisches durch den Bauchflossentrenner.

## Revendications

1. Machine à fileter le poisson (1) pour couper des filets de poisson, la machine comprenant
• une ligne d'alimentation pour alimenter le poisson dans une direction d'alimentation (2) à travers la machine et avec le côté droit et le côté gauche du poisson sur les côtés opposés d'un plan central, la ligne d'alimentation comprenant :
• un dispositif de coupe (7, 8, 9, 10) pour fileter au moins la partie ventrale du poisson, **caractérisé en ce qu'**elle comprend en outre :
• un séparateur de nageoires pelviennes (6) situé en amont du dispositif de coupe (7, 8, 9, 10) et configuré pour séparer une connexion entre une nageoire pelvienne côté droit (51) et une nageoire pelvienne côté gauche (52) du poisson.

2. Machine selon la revendication 1, dans laquelle le séparateur de nageoires pelviennes (6) comprend un couteau agencé pour couper le long du plan central (53).

3. Machine selon la revendication 2, dans laquelle le séparateur de nageoires pelviennes est agencé pour séparer la connexion entre les nageoires pelviennes latérales droite et gauche sans libérer les nageoires pelviennes latérales droite et gauche du poisson.

4. Machine selon l'une quelconque des revendications précédentes, dans laquelle le séparateur de nageoires pelviennes définit un plan de séparation entre des plans de coupe définis par le dispositif de coupe pour couper la partie ventrale du poisson.

5. Machine selon la revendication 4, dans laquelle le plan de séparation du séparateur de nageoires pelviennes et les plans de coupe du dispositif de coupe sont sensiblement parallèles à la direction d'alimentation.

6. Machine selon l'une quelconque des revendications précédentes, dans laquelle le séparateur de nageoires pelviennes comprend une lame de coupe circulaire tournant dans le plan de séparation.

7. Machine selon la revendication 6, dans laquelle le dispositif de coupe comprend deux lames de coupe circulaires disposées sur des côtés opposés du plan de coupe.

8. Machine selon la revendication 7, dans laquelle les deux lames de coupe circulaires du dispositif de coupe sont disposées de manière à chevaucher partiellement la lame circulaire du séparateur de nageoires pelviennes dans la direction d'alimentation.

9. Machine selon l'une quelconque des revendications précédentes, dans laquelle la machine comprend un actionneur (14) auquel le séparateur de nageoires pelviennes (6) est connecté.

10. Machine selon la revendication 9, dans laquelle l'actionneur est agencé pour déplacer le séparateur de nageoires pelviennes dans le plan de séparation entre une position où le séparateur de nageoires pelviennes chevauche partiellement le dispositif de coupe dans la direction d'alimentation et une position où il n'y a pas de chevauchement entre le séparateur de nageoires pelviennes et le dispositif de coupe dans la direction d'alimentation.

11. Machine selon l'une quelconque des revendications 9 à 10 précédentes, comprenant en outre un contrôleur configuré pour commander l'actionneur (14) en fonction de l'emplacement d'un poisson à couper par rapport au séparateur de nageoires pelviennes, de telle sorte que le séparateur de nageoires pelviennes est activé, et le bord tranchant du séparateur de nageoires pelviennes est situé pour séparer une nageoire pelvienne d'un poisson transporté le long de la ligne d'alimentation et passant par le séparateur de nageoires pelviennes, ou configuré pour commander l'actionneur en fonction de l'emplacement d'un poisson à couper par rapport au séparateur de nageoires pelviennes, de telle sorte que le séparateur de nageoires pelviennes est désactivé, et le bord tranchant du séparateur de nageoires pelviennes est retiré de la coupe dans un poisson transporté le long de la ligne d'alimentation, ou configuré pour commander l'actionneur pour activer et désactiver le séparateur de nageoires pelviennes de telle sorte que le séparateur de nageoires pelviennes est en position pour séparer la nageoire pelvienne d'un poisson juste avant que la nageoire pelvienne ne passe par l'emplacement du séparateur de nageoires pelviennes, et de telle sorte que le séparateur de nageoires pelviennes est hors de la position de coupe dès que la nageoire pelvienne d'un poisson a été coupée.

12. Machine selon l'une quelconque des revendications précédentes, dans laquelle le dispositif de coupe comprend un premier ensemble de lames de coupe et un second ensemble de lames de coupe pour fileter la partie ventrale et la partie dorsale d'un poisson et dans laquelle le séparateur de nageoires pelviennes est situé le long et au moins principalement au-dessus d'une ligne horizontale de la ligne d'alimentation pour alimenter le poisson à travers la machine à fileter et le premier ou le second ensemble de lames de coupe pour couper la partie dorsale d'un poisson est situé le long et au moins principalement au-dessous de la ligne horizontale de la ligne d'alimentation.

13. Procédé de filetage d'un poisson d'une espèce comprenant une nageoire pelvienne droite et une nageoire pelvienne gauche sur les côtés opposés d'un plan central du poisson, le procédé comprenant la séparation d'une connexion entre la nageoire pelvienne droite et la nageoire pelvienne gauche et le filetage ultérieur du poisson en coupant les filets des côtés droit et gauche de la partie ventrale en coupant sur les côtés opposés du plan central, le procédé étant mis en œuvre dans une machine à fileter le poisson selon l'une quelconque des revendications 1 à 12, et le procédé comprenant les étapes consistant à
i. charger un poisson sur la ligne d'alimentation de la machine à fileter le poisson,
ii. diriger le poisson vers le séparateur de nageoires pelviennes,
iii. séparer la connexion entre les nageoires pelviennes du poisson par le séparateur de nageoires pelviennes.

14. Procédé selon la revendication 13, le procédé comprenant les étapes consistant à
i. diriger le séparateur de nageoires pelviennes vers un point situé entre les nageoires pelviennes droite et gauche du poisson,
ii. séparer la connexion entre les nageoires pelviennes du poisson par le séparateur de nageoires pelviennes sans libérer les nageoires pelviennes droite et gauche du poisson.

15. Procédé selon la revendication 13 ou 14, comprenant en outre une étape consistant à diriger le séparateur de nageoires pelviennes loin du poisson après l'étape de séparation de la connexion entre les nageoires pelviennes du poisson par le séparateur de nageoires pelviennes.
